Europäisches Patentamt

European Patent Office

Office européen des brevets

(11) Publication number: 0 190 854
A2

# (12) EUROPEAN PATENT APPLICATION

(21) Application number: 86300514.6

(22) Date of filing: 27.01.86

(51) Int. Cl.⁴: **G 11 B 5/66**
**G 11 B 5/85**

(30) Priority: 28.01.85 JP 12481/85

(43) Date of publication of application:
13.08.86 Bulletin 86/33

(84) Designated Contracting States:
DE FR GB NL

(71) Applicant: TORAY INDUSTRIES, INC.
2, Nihonbashi-Muromachi 2-chome Chuo-ku
Tokyo 103(JP)

(72) Inventor: Akamatsu, Takayoshi
3-311, 2-2, Nionohama
Otsu-shi Shiga(JP)

(72) Inventor: Oka, Tethuo
B2-12, 2-15, Sonoyama
Otsu-shi Shiga(JP)

(72) Inventor: Hayashi, Kenji
2-28, Daigo Shoguchi-cho
Kyoto-shi Kyoto(JP)

(74) Representative: Ellis, John Clifford Holgate et al,
MEWBURN ELLIS & CO. 2/3 Cursitor Street
London EC4A 1BQ(GB)

(54) Method for producing a perpendicular magnetic recording medium.

(57) In a process involving the successive formation of a soft magnetic film substantially consisting of Fe and Ni and a perpendicular magnetic film on a plastic substrate, the soft magnetic film is vacuum-deposited while its formation position is irradiated with an ion-beam so as to prevent cracks and lessen coercive force.

Apparatus for carrying out the deposition of the soft magnetic film includes a vacuum chamber (8) divided by a partition (7) into an upper chamber (9) and a lower chamber (10) which can be exhausted through outlets (11) and (12). The film substrate strip (6) is fed from a roll (1) round a cooled drum (3) to a winder (5). An evaporator (16) contains an iron-nickel ingot (15), and ion-beam radiation issues from the source (17). A screen (13) has an aperture (14) which limits the incident angle of the ion-beam onto the position of the substrate (6) passing round the drum (3).

EP 0 190 854 A2

Fig. I

## METHOD FOR PRODUCING A PERPENDICULAR
## MAGNETIC RECORDING MEDIUM

The present invention relates to a method for producing a perpendicular magnetic recording medium. More particularly, the present invention relates to a method for producing, by means of vacuum deposition, a thin-film type perpendicular magnetic recording medium having a perpendicular magnetic film and a soft magnetic film substantially consisting of iron and nickel.

The so-called dual layer recording medium, in which a soft magnetic film is interposed between the substrate and the perpendicular magnetic film, is known to exhibit a higher reproducing output and a higher recording and reproducing sensitivity than the single layer recording medium having only the perpendicular magnetic film formed on the substrate (c.f. United State Patent 4,210,946). As such a soft magnetic film, an iron/nickel alloy, i.e., permalloy, film is used in the art. Permalloy is utilized for the soft magnetic film because it has excellent soft magnetic properties. Furthermore its constituent elements, i.e., iron and nickel, have virtually the same vapor pressure as one another to form the soft magnetic film without variation in composition over a long period of deposition time. However, when the soft magnetic film substantially consisting of iron and nickel is formed by vacuum deposition, the problems of crack generation and an increase in coercive force occur. To prevent cracking during the formation of a soft magnetic film substantially consisting of iron and nickel by vacuum deposition, the temperature of the substrate must be elevated to 200°C or higher. This leads to an industrially significant problem in that a perpendicular magnetic recording medium having a crack-free soft magnetic film cannot be produced on a polymeric substrate not having a satisfactory heat-resistance.

A proposal has been made to form a soft magnetic film substantially consisting of iron and nickel by means of ion-beam sputtering, in which an ion-beam consisting of argon ions is used for irradiation (Technical Report of Electronics and Communication Institute, MR82-26 Pl '82, by Tsutomu Nishimura et al)

The sputtering techniques, even an ordinary one without ion beam radiation, ensure that the formation of cracks does not occur in the soft magnetic film substantially consisting of iron and nickel and deposited on a substrate at room temperature, and easily ensure a coercive force which is allegedly preferred for the soft magnetic film, i.e., from 1 to 20 Oe. Nevertheless, the film-formation speed in a sputtering method is too low to be suitable for use in mass production. Contrary to this, the film-formation speed is high in a vacuum deposition method, but the formation of cracks in the soft magnetic film cannot be prevented unless the substrate temperature is elevated to 200°C or higher. In addition, the coercive force of the soft magnetic film formed on a low temperature substrate cannot be kept to 10 Oe or less. Cracks in the film cause noise when the perpendicular magnetic recording medium is used for recording and reproduction and, therefore, must be eliminated. In addition, a lower coercive force of the soft magnetic film is more preferable to enhance the recording and reproducing sensitivity.

The present inventors made a serious study of ways in which to provide a soft magnetic film without the occurrence of cracks and having uniform and improved magnetic properties on the substrate kept at a low temperature, by means of vacuum deposition, since by utilizing this technique it is not necessary for the polymeric substrate to be heated to a high temperature, and the soft magnetic film can be produced at a high productivity.  The inventors thus attained the present invention.

It is an object of the present invention to provide a method of producing a perpendicular magnetic recording medium appropriate for high density recording and having an improved recording and reproducing sensitivity, which method attains a high productivity even with the use of a polymeric substrate which does not have an especially high heat-resistance.

In accordance with the objects of the present invention, there is provided a method of producing a perpendicular magnetic recording medium, wherein, on a substrate consisting of polymer, a soft magnetic film and then a perpendicular magnetic film having a magnetic anisotropy perpendicular to the substrate are successively formed by a vacuum deposition, characterized in that  the soft magnetic film substantially consists of iron and nickel and is formed by vacuum deposition while the depositing position of the soft magnetic film is irradiated with an accelerated ion-beam.

The present invention is hereinafter described with reference to Figs. 1, 2 and 4.

Figure 1 illustrates an example of the electron-beam, vacuum-deposition apparatus for producing a soft magnetic film according to the present invention;

Fig. 2 illustrates an incident angle of the vapor stream from a source;

Fig. 3 is a hysteresis graph illustrating a method for measuring the magnetic anisotropy field Hk; and

Fig. 4 illustrates an example of the electron-beam, vacuum-deposition apparatus for producing a perpendicular magnetizing film.

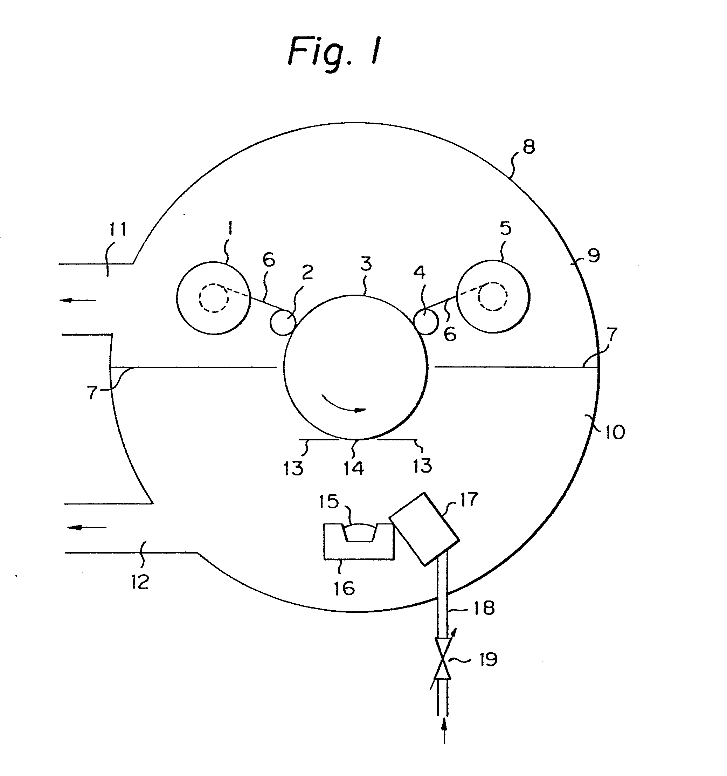

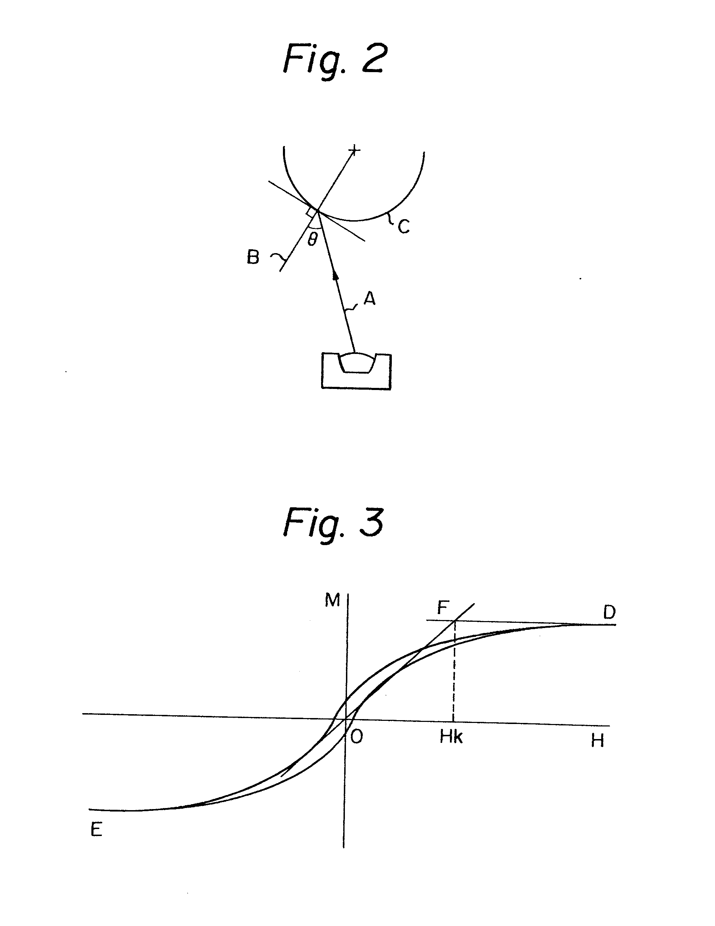

Referring to Fig. 1, the conveying system of a film substrate strip 6, which consists of an organic polymer, is constituted by an unwinding shaft 1, a nip roll 2, a main drum 3, a nip roll 4, and a winding shaft 5. The film substrate strip 6 is disposed on and wound around the unwinding shaft 1, in the form of a roll. The film substrate strip 6 is transferred via the nip roll 2, the main drum 3, and the nip roll 4, and is then wound on a core of the winding shaft 5. The main drum 3 is provided with a cooling mechanism, for example, a water conduit (not shown), which allows the rear surface of the film substrate strip 6 to be maintained at a temperature of 50°C or less. The main drum 3 has a ground potential. A partition wall 7 divides a vacuum chamber 8 into an upper chamber 9 and a lower chamber 10, respectively. Exhaust outlets 11 and 12 are provided for the upper and lower chambers 9 and 10, respectively, and are utilized for exhausting the respective chambers 9 and 10. A shielding plate 13 limits an incident angle of a vapor stream from a source 17. The incident angle herein indicates an angle $\theta$, as shown in Fig. 2, defined by a vapor stream A entering a substrate surface C and a normal B from the substrate surface C. The shielding plate 13 shown in Fig. 1 has an aperture 14 which ensures that the vapor stream is deposited on the substrate surface C at a selected incident angle not exceeding 45°. The vaporized material substantially consisting of iron and nickel is denoted by 15. The ion-source 17 generates and accelerates ions and extracts an ion beam. The gas to be ionized is fed through a variable leak valve 19 and an introducing conduit 18. The electron beam evaporator is denoted by 16.

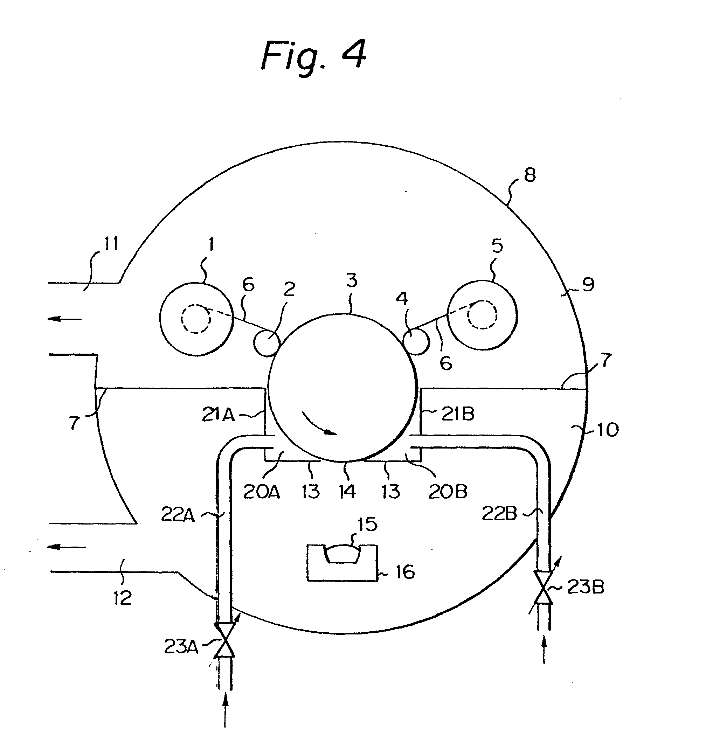

In addition to the members shown in Fig. 1, the apparatus illustrated in Fig. 4 is provided with partition walls 21A, 21B, gas-feeding chambers 20A, 20B surrounded by the shielding plate 13, gas-conduits 22A and 22B for introducing the gas into the gas-feeding chambers 20A, 20B, and variable leak-valves 23A, 23B.

The apparatuses described above are used for producing a perpendicular magnetic recording medium in accordance with the method of the present invention. The method for producing a perpendicular magnetic recording medium in accordance with the present invention is not limited to those described above.

The vacuum deposition method utilized in the present invention may be any method including a resistance heating vaporization, an induction heating vaporization, an electron-beam vaporization, a laser-beam vaporization, and an arc-discharge vaporization. The electron-beam vaporization and the induction heating vaporization are preferable from the viewpoint of improving the magnetic properties, such as the coercive force and anisotropic field, and enhancing the deposition speed. The electron beam vapor deposition technique is most preferable from an industrial point of view, to enhance features such as adaptability and mass production.

It is important in the present invention that the vacuum deposition of the soft magnetic film substantially consisting of iron and nickel is carried out under the irradiation of an accelerated ion-beam. The ion-beam is applied to the position at which the deposition of the soft magnetic film occurs. It is possible thereby to form on the substrate having a low temperature, a soft magnetic film without cracks and having uniform and improved magnetic properties.

The ion beam, which is used for irradiation during growth of a soft magnetic film, consists of accelerated ions which are formed by ionizing such gases as hydrogen, ammonia, argon, helium, neon, krypton, and the like into monovalence, divalence, or higher valency. An inert gas, such as argon, is most preferred as the kind of gas in the above gases, since the coercive force of the soft magnetic film is lessened when an inert gas is used. Reducing gases, such as hydrogen and ammonia, are preferred alternatives.

The acceleration energy of ions incident on the depositing position of a soft magnetic film is preferably in the range of from 200eV to 6keV, since within this range, the radiation by ions is highly effective and the organic polymer of the substrate is not thermally damaged. A more preferable range is from 500eV to 4keV, and the most preferable range is from 1keV to 3keV.

The radiation density of the ion beam is preferably in the range of from $1\mu A/cm^2$ to $50mA/cm^2$, since within this range, the radiation by ions is highly effective and the organic polymer of the base is not thermally damaged. A more preferable range is from $5\mu A/cm^2$ to $20mA/cm^2$, and the most preferable range is from $20\mu A/cm^2$ to $5mA/cm^2$.

The radiation by ion beam may be continuous or intermittent, but is preferably continuous, since the effects desired by the radiation by ions can be easily attained.

The entire depositing positions of a soft magnetic film are desirably irradiated with an ion beam. The radiation is particularly effective if it is carried out for a period including an initial stage of forming a soft magnetic film.

The ion source used for producing the ion beam in accordance with the present invention is preferably a so-called plasma ion source, since an ion beam having a

- 7 -

0190854

relatively high current is necessary for the radiation. The plasma ion source includes a plasma-generating chamber, an extraction electrode, which has an aperture, for extracting ions therethrough, and electrodes for rectifying the shape of an ion beam.

The plasma ion source generally acts as follows. The element to be ionized or its compound is gasified and then introduced into the plasma generating chamber, and is ionized by a technique such as electron bombardment by a microwave discharge, electron oscillation, electron beam injection, and Penning discharge. The generated ions are extracted from the plasma generating chamber through the extraction aperture and, at the same time, accelerated under the electric field generated by the extraction electrode. The difference of the potential between the plasma and the substrate which is irradiated with ions, acts as the acceleration energy. The radiation density of the ions can be varied by varying the ionization efficiency in the plasma generating chamber or by rectifying the shape of the ion beam which has been extracted.

The gas introduced into the ion source should be maintained at a requisite minimum amount, preferably as small as possible, required for forming the ions, since the generation of cracks in the soft magnetic film can be thus prevented and the coercive force can be lessened. The amount of gas introduced into an ion source is usually monitored by the flow rate or pressure thereof in the vacuum chamber in which the ion source is contained. The requisite minimum amount of gas introduced into the ion source is determined by the gas-exhausting speed, and hence varies in accordance with the requirements of the respective apparatuses used for implementing the ion-beam formation.

The temperature of the substrate is controlled, when the soft magnetic film is formed, by the holder with which the substrate is brought into contact. The holder is, for example, the main drum 3 shown in Fig. 1. The holder is brought into close contact with the rear surface of the substrate and the substrate is heated or cooled by the holder. By controlling the temperature of the substrate, thermal deformation of the substrate which consists of polymer is prevented, and an increase in the coercive force of the  soft magnetic film due to stress caused by a difference in the thermal expansion coefficients between the substrate, an inorganic material film, and a soft magnetic film, during the formation of the soft magnetic film is also prevented. Therefore, a lower temperature at a holder, is more preferable.

Heating of the substrate is unnecessary, since the generation of cracks in the soft magnetic film is prevented by the ion-beam radiation during the vapor-deposition of a soft magnetic film. However, the ion-beam radiation is, also effective for vacuum-depositing a soft magnetic film onto a heated substrate. Namely, the temperature of the substrate during the formation of a soft magnetic film should be from -30°C to 180°C, preferably from -20°C to 150°C, more preferably, from -20°C to 130°C.

The incident angle defined hereinabove is preferably 45 degrees or less, to lessen the coercive force of a soft magnetic film substantially consisting of iron and nickel. More preferably, the incident angle is 30 degrees or less.

The soft magnetic film used in the present invention mainly comprises iron and nickel. In the weight proportion of iron to nickel, there are two preferable ranges, most preferably in the range of from 10:90 to 30:70,  and alternatively, in the range of from 40:60 to 60:40, for the purpose of lessening the coercive force and enhancing the permeability. One or more minor metal component(s) selected from the group consisting of manganese, molybdenum, chromium, and copper may be preferably added to the soft magnetic film for the purpose of lessening coercive force and enhancing the permeability. The amount of such minor metal component(s) may be at most 10% by weight. The addition of molybdenum and copper is particularly preferable since their effect on lessening the coercive force and enhancing the permeability is high.

Preferred alloys with an additive(s) other than iron and nickel, all by weight proportion, have the following approximate compositions: 21.2 iron/78.5 nickel/0.3 manganese; 15.7 iron/79.0 nickel/5.0 molybdenum/0.3 manganese; 18.0 iron/75.0 nickel/2.0 chromium/5.0 copper; 17.7 iron/78.5 nickel/3.8 chromium; 16.0 iron/80.0 nickel/4.0 molybdenum; and, 14.0 iron/77.0 nickel/5.0 copper/4.0 molybdenum.

The recording and reproducing properties of the perpendicular magnetic recording medium are improved by enhancing a mutual action between the perpendicular magnetic film and the magnetic head. To this end, the soft magnetic film should exhibit a coercive force in a direction parallel to the film surface of preferably 20 Oe or less, more preferably 10 Oe or less.

The soft magnetic film should have a thickness which is the optimum with regard to the mutual action between the perpendicular magnetic film and the magnetic head. Such a mutual action is attained by preferably controlling the thickness of a soft magnetic film so that the saturation magnetic moment per unit area thereof is at least a quarter, and at most ten times that of the perpendicular magnetic film. More preferably, the saturation magnetic moment of the soft magnetic film relative to that of the perpendicular magnetic film should be at least one third, and six times at most. The most preferred value is at least a half, and four times at most.

The polymers appropriately used for the substrate in the present invention are: polyesters, such as polyethylene terephthalate, polyethylene napthalate, and polyethylene carboxylate; polyolefin, such as polyethylene, polypropylene, and polybutene; polymethyl methacrylate; polycarbonate; polysulfone; polyamide; aromatic polyamide; polyphenylene sulfide; polyphenylene oxide; polyamide-imide; polyimide; polyvinylchloride; polyvinylidenechloride; polyvinylidene fluoride; polytetrofluoro ethylene; cellulose acetate; methyl cellulose; ethyl cellulose; epoxy resin; polyurethane resin; mixture of any of those materials; and copolymers of any of these materials. The biaxially oriented film, sheet, and the like have excellent flatness and shape stability, and hence are most appropriate for the base. Polyester, polyphenylene sulfide, and aromatic polyamide are most appropriate. The substrate can have any shape, such as a drum, disc, sheet, tape, card, and the like. There is no limit to the thickness of the substrate, but when the substrate is in the form of a sheet, a tape or a card, the thickness is preferably in the range of from 3 to 500 μm, particularly from 4 to 200 μm. The substrate used in the present invention may be subjected, prior to formation of the soft magnetic film, to various surface treatments or pretreatments to facilitate the bonding, improve the flatness, for coloring, anti-static treatment, imparting wear resistance, and the like.

The perpendicular magnetic film having a magnetic anisotropy perpendicular to the substrate surface herein is defined as follows. An index is provided for representing the magnetic anisotropy in the direction perpendicular to the film surface, that is, magnetic anisotropy field Hk, and it is considered that the higher the value of the magnetic anisotropy field Hk, the more easily is the perpendicular magnetic film magnetized in the perpendicular direction and thus has more excellent characteristics. Referring to Fig. 3, the origin is denoted by O, the ordinate indicates the magnetizing quantity M of a perpendicular magnetic film being magnetized, and the abscissa indicates an external magnetic field H being applied to the perpendicular
magnetic film.  The hysteresis loop shown in Fig. 3
represents the case wherein the external magnetic
field H is applied in a direction parallel to the
surface of a perpendicular magnetic recording film-
sample.  The magnetic anisotropy  field Hk is equal to
the value of the external magnetic field H at the point
of intersection F formed by the tangent drawn from the
origin O to the hysteresis loop and by the straight line
drawn from the saturation magnetization point D in
parallel to the axis of external magnetic field H.

The hysteresis loop of only the perpendicular
magnetic film, not including that of the soft magnetic
film, can be obtained by a preliminary measurement of
the latter loop, followed by measuring the hysteresis
loop of the perpendicular magnetic film, and subtracting
the hysteresis loop of the soft magnetic film from that
of the perpendicular magnetic film.

The magnetic film having a magnetic anisotropy
field Hk of 2kOe or larger is usually referred to as the
perpendicular magnetic film.

For the perpendicular magnetic film, a ferromagnetic
metal, such as cobalt, iron, and nickel, an alloy of any
of these metals with another metal(s), a mixture of any
of these metals and a metal oxide, and an oxide of any
of these metals can be used in the present invention.
Among these, an alloy of a ferromagnetic metal(s) and
another metal(s) and a mixture of a ferromagnetic metal
and metal oxide are preferred.

Representative preferred alloys are cobalt-chromium
alloy (c.f. USP No. 4,477,488), cobalt-rhodium, cobalt-
zinc, and cobalt-iridium alloys (c.f. USP No. 4,486,498), a
cobalt-molybdenum-vanadium alloy (c.f. USP No. 4,452,864)
and a cobalt-chromium-vanadium alloy (c.f. USP
No. 4,454,195).  These alloys are well known.  A representative preferred mixture is disclosed in EPC application No. 85.301944.6 filed by the present applicant.

The perpendicular magnetic film is usually formed on a substrate by sputtering or vacuum-deposition. The method for forming an alloy film by sputtering is not appropriate for mass production, since the formation speed is low. In addition, the heating of a substrate up to a temperature of from 150 to 200°C is advisable for improving the magnetic properties of a perpendicular magnetic film. The method for forming an alloy film by vacuum deposition provides a high speed film formation, but it is difficult to maintain the composition in a uniform state during vacuum deposition. In addition, the heating of a substrate up to a temperature of from 150 to 300°C is advisable for improving the magnetic properties of a perpendicular magnetic film (c.f. USP No. 4,477,488). On the other hand, according to the method proposed by the present assignee (applicant), ferromagnetic metal is vacuum-deposited in gas containing oxygen, thereby enabling the formation, at a high speed, of a perpendicular magnetic film consisting of ferromagnetic metal and a metal oxide and having improved magnetic properties, without heating the substrate. Accordingly, in order to utilize an advantage of the present invention, i.e., the formation of improved, soft magnetic film and perpendicular magnetic film without heating the substrate, the perpendicular magnetic film consisting of ferromagnetic metal and metal oxide is preferably used. Most preferably, this perpendicular magnetic film substantially consists of cobalt and cobalt oxide and/or iron and iron oxide, in the light of obtaining the desired magnetic properties. The cobalt oxide includes $CoO$, $Co_2O_3$, $Co_3O_4$, and the like and also includes nonstoichiometric oxide and peroxide expressed by $CoO_x$, x ranging between 0 and 2. Iron oxide includes $FeO$, $Fe_2O_3$, $Fe_3O_4$, and the like and also includes nonstoichiometric oxide and peroxide expressed by $FeO_x$, x ranging between 0 and 2.

The perpendicular magnetic film may contain, in addition to cobalt, cobalt oxide, iron, and iron oxide, for example, nickel, copper, chromium, aluminum, carbon, silicon, vanadium, titanium, zinc, manganese, a metal oxide, a metal nitride, and a metal hydroxide, in such a content that the magnetic anisotropy in the perpendicular direction is not impeded.

The thickness of the perpendicular magnetic film is not particularly limited but, practically, should be in the range of from 0.05 μm to 5 μm. A thickness in the range of from 0.1 μm to 2 μm is most preferred in the light of flexibility and head touch.

The perpendicular magnetic film can be formed by such physical vapor deposition techniques as vacuum deposition, ion-plating, and sputtering. The vacuum deposition technique is particularly preferred, since the temperature rise of the substrate is small and the deposition speed is high.

During the vacuum deposition of a perpendicular magnetic film, the pressure of gas media which contains oxygen, in the vicinity of the base, is desirably in the range of from $1 \times 10^{-3}$ Torr to $5 \times 10^{-2}$ Torr, to improve the magnetic properties of the perpendicular magnetic film substantially consisting of cobalt and cobalt oxide and/or iron and iron oxide.

During the formation of a perpendicular magnetic film, the substrate is preferably cooled to a temperature of 50°C or less, to enhance the magnetic anisotropy field Hk of the perpendicular magnetic film. During the formation of a perpendicular magnetic film, iron vapor and/or cobalt vapor move toward and arrive on the substrate at the incident angle defined above. The preferred incident angle of 45° or less described above for the soft magnetic film is also preferred for the perpendicular magnetic film, since the magnetic anisotropy field Hk is enhanced thereby. Such an incident angle is attained by providing a shielding plate which blocks vapor entering at an angle exceeding 45°.

The pressure distribution in the vacuum chamber is such that the pressure increases in accordance with the distance from an exhaust outlet. The pressure in the vacuum chamber is an important factor for forming the perpendicular magnetic film. The pressure in the vicinity of the substrate mentioned above indicates a pressure measured at a linear distance of 500 mm or less from the center of the area at which a perpendicular magnetic film is formed.

A method for producing a perpendicular magnetic recording medium having a structure comprising polymeric substrate, soft magnetic film and perpendicular magnetic film, is described hereinafter but the scope of the invention is not limited to the method described below.

In the conveying system of a strip film substrate of the vacuum-deposition apparatus shown in Fig. 1, a strip film substrate consisting of a polymeric material, for example, polyethylene terephthalate, is disposed. An ingot having a weight proportion of iron and nickel of 17:83 is disposed in the recess of an electron-beam evaporator 16. The vacuum chamber 8, in which the ingot is disposed on the electron-beam evaporator 16, is exhausted through the respective exhaust outlets 11, 12 until the pressure of $1 \times 10^{-4}$ Torr or less is obtained in the upper chamber 9 and the pressure of $5 \times 10^{-6}$ Torr or less is obtained in the lower chamber 10. Subsequently, argon gas is admitted to the ion-source 17 through the variable leak valve 19. The ion-source 17 is manipulated so that the argon ions arriving at the base 6 on the main drum 3 have an acceleration energy of 1keV and a radiation density of 200 $\mu A/cm^2$. Upon completing the manipulation of the ion-source 17, the substrate, i.e., the polyethylene terephthalate film substrate mentioned above, is driven to run, and the soft magnetic film substantially consisting of iron and nickel is continuously formed, at a deposition rate of 10 $\mu m/minute$ up to a thickness of

approximately 0.25 μm on the polyethylene terephthalate film substrate by means of the electron-beam, vacuum deposition. During this time, the main drum 3, which is brought into contact with the rear surface of the substrate, has a ground potential and is cooled to 20°C or less. The shielding plate 13 is disposed in such a manner that the iron and nickel vapor is incident upon the substrate at an incident angle of 45 degrees or less.

The polyethylene terephthalate film substrate having a soft magnetic film deposited thereon is located on the coveying system shown in Fig. 4. The vacuum chamber 8, in which, for example, cobalt is disposed in the recess of the electron-beam evaporator 16, is exhausted through the exhaust outlets 11 and 12, until the pressure of $5 \times 10^{-4}$ Torr or less and the pressure in the vicinity of a substrate of $5 \times 10^{-5}$ Torr or less are attained in the upper chamber 9 and the lower chamber 10, respectively. Subsequently, a gas mixture of nitrogen gas and oxygen gas having a partial pressure ratio of 80:20 is admitted to the vicinity of the substrate through the variable leak valves 23A, 23B, so as to attain a predetermined pressure in the vicinity of the substrate, in the range of from $1 \times 10^{-3}$ Torr to $5 \times 10^{-2}$ Torr. After attaining the predetermined pressure, the polyethylene terephthalate film substrate having a soft magnetic film preliminarily deposited thereon is driven to run, and a perpendicular magnetic film substantially consisting of cobalt and cobalt oxide is continuously formed on the soft magnetic film at a deposition rate of 10 μm/minute up to a thickness of approximately 0.25 μm by means of electron-beam, vacuum deposition.

During this time, the main drum 3, which is brought into contact with the rear surface of the substrate, is cooled to 10°C or less. The shielding plate 13 is disposed in such a manner that the cobalt vapor is incident upon the substrate at an incident angle of 45 degrees or less.

In addition to the procedure for producing a perpendicular magnetic recording medium described above, an additional step for producing a lubricant layer or protective layer may be carried out. Such layers are used to improve the properties of the perpendicular magnetic recording medium, e.g., the sliding property relative to the magnetic head and guide system, wear resistance, and running-durability. Also for these purposes a procedure for forming a back coating may be added.

It is preferred that, between the soft magnetic film and the perpendicular magnetic film, a 50 $\sim$ 500 $\overset{\circ}{\text{A}}$ thick layer of nonmagnetic metal or nonmagnetic oxide is interposed, because the soft magnetic film and the perpendicular magnetic film are magnetically isolated from one another, so that an apparent increase in coercive force of the soft magnetic film due to the presence of the perpendicular magnetic film is prevented. This enables reduction in the recording and reproducing sensitivity to be prevented. Accordingly, in accordance with the method of present invention, a nonmagnetic metal or oxide-layer having a thickness in the range of from 50 to 500 $\overset{\circ}{\text{A}}$ can be interposed between the soft magnetic film and the perpendicular magnetic film.

It is not very clearly elucidated why the soft magnetic film substantially consisting of iron and nickel, free of cracks and exhibiting a low coercive force, can be obtained even on the substrate kept to a low temperature, by means of vacuum deposition during which ion-beam radiation is carried out. In this regard, the following results were observed by the present inventors. The crystals of the soft magnetic film substantially consisting of iron and nickel are more strongly oriented, due to the vacuum-deposition during which the ion-beam radiation is carried out, such that the orientation of the (111) plane parallel to the film surface is intensified. A minor amount of the element, which is ionized to produce the ion beam, is incorporated into the soft magnetic film. In addition, the quantity of carbon atoms, which are contained in the soft magnetic film as impurities, is lessened by the ion-beam radiation during the vacuum-deposition. It is presumed, based on the facts observed as above, that the energy of the ions and the activation energy of the ions are effective for relaxing the internal stress of a soft magnetic film during growth, promoting the crystal orientation, and striking out the impurities, so that the soft magnetic film substantially consisting of iron and nickel and formed by vacuum deposition, is free of cracks and exhibits a low coercive force.

When the ion beam consists of argon ions, the radiation by an ion beam is most effective, since, presumably, the sputtering yield of argon ions is relatively high and the quantity of the element incorporated in the film is small.

In accordance with the method for producing a perpendicular magnetic recording medium according to the present invention, the crystallization degree and crystal orientation of the soft magnetic film substantially consisting of Fe and Ni are enhanced. In addition, the quantity of an impurity, such as carbon, incorporated into the soft magnetic film during the vapor deposition is small, and the internal stress remaining in the film after the formation thereof is small. The perpendicular magnetic recording medium produced according to the present invention is free of cracks which cause drop-out, drop-in, and noise, and hence is uniform. The perpendicular magnetic recording medium also has a high recording and reproducing sensitivity due to improved magnetic properties. In the present invention, the orientation of (111) plane in a direction parallel to the film surface is intensified and a half value width of the (111) diffraction peak of 10° less can be attained. An impurity, such as carbon, acts in the soft magnetic film to enhance the coercive force of the film, and hence, should not be incorporated therein if possible. In the present invention, the quantity of carbon atoms incorporated into the soft magnetic film is 0.2 atomic % or less, and hence the coercive force of the film is low. As a result, the perpendicular magnetic recording medium produced by the method of the present invention exhibits only slight wear and peel due to contact with the magnetic head and guide system, and hence, has an improved head-touch. In addition, the vacuum deposition and low substrate-temperature are advantageously combined so that a perpendicular magnetic recording medium is formed at a high speed on a plastic substrate which has a low heat-resistance.

The perpendicular magnetic recording medium produced by the method of present invention can be broadly used for the magnetic recording of audio, video, and digital signals, in the form of, for example, a tape, a sheet, a card, a disc, and a drum.

The method employed for measuring the properties of the perpendicular magnetic recording medium and the criterions for evaluating those properties are described hereinafter.

A. Coercive Force

A vibration sample magnetometer (produced by Riken Denshi Co., Ltd., BHV-30) is used and a hysteresis loop is recorded by applying an external magnetic field parallel to the film surface of a sample. The coercive force is obtained from this hysteresis loop based on the definition given by JIS C-2561.

B. Cracks

The presence or absence of cracks in the soft magnetic film and the perpendicular magnetic film is detected by the following method.  A soft magnetic film and a perpendicular magnetic film are observed by a metallurgical microscope (produced by Nippon Kogaku Co., Ltd., "OPTIPHOT") at a magnification of from 80 to 1000 times, and the presence or absence of cracks is detected.

C.    Crystal Orientation of Soft Magnetic Film

By using an X-ray diffraction device (an X-ray generator produced by Rigaku Denki Co., Ltd., D-8C type); a goniophotometer (produced by Rigaku Denki Co., Ltd., 2155D type); and a counting recorder (produced by Rigaku Denki Co., Ltd., RAD-A type), the diffraction pattern is measured by a reflection method, using a CuKα ray.  With the proviso that the thickness of the soft magnetic films is identical, a relative height of the diffraction peak from the (111) plane and a half-value width of this diffraction peak are measured and used as an index indicating the intensity of orientation of the (111) plane parallel to the film surface.

The higher the diffraction peak and narrower the half-value width of the diffraction peak, the stronger is the crystal orientation indicated.

D.    Impurity Atoms in Soft Magnetic Film

An XPS (X-ray photoelection spectroscopy) (produced by VG Scientific Limited, ESCALAB5 type) is used to measure the quantity of impurities in the film, and the quantity of an element which is ionized to form the ion beam and then incorporated in the film.

The surface layer of a sample is etched by nitrogen ions and the sample is then subjected to measurement by XPS.

Embodiments of the method according to the present invention are described hereinafter by way of examples.

Examples 1 ∿ 3.  Comparative Example 1

A 50 μm thick biaxially oriented polyethylene terephthalate film was disposed in the conveying system of a strip film of the vacuum-deposition apparatus shown in Fig. 1.

An ingot having a weight proportion of iron and nickel of 17:83 was disposed in the recess of an electron-beam evaporator 16. The vacuum chamber 8, in which the ingot was disposed on the electron-beam evaporator 16, was exhausted through the respective exhaust openings 11, 12 until a pressure of $1 \times 10^{-4}$ Torr or less was obtained in the upper chamber 9 and a pressure of $5 \times 10^{-6}$ Torr or less was obtained in the lower chamber 10. The argon gas was then admitted to the ion-source 17 through the variable leak valve 19. The ion-source 17 was manipulated so that the argon ions arriving at the base 6 on the main drum 3 exhibited a predetermined acceleration energy and radiation density. Upon completing the manipulation of the ion-source 17, the base, i.e., the polyethylene terephthalate film mentioned above, was driven to run at a predetermined speed. The ingot consisting of iron and nickel in a weight proportion of 17:83 was melted and vaporized by the electron-beam. An approximately 0.25 μm thick soft magnetic film was continuously formed at a deposition rate of 10 μm/minute on the polyethylene terephthalate film by means of the electron-beam, vacuum-deposition.

The temperature of the main drum 3, which was brought into a close contact with the rear surface of the polyethylene terephthalate film, was kept at 10°C. The potential of the main drum was ground. The shielding plate 13 was disposed in such a manner that the iron and nickel vapor was incident upon the base at an incident angle of 45 degrees or less. The electron-beam evaporator used was an EGL-110 type produced by Nippon Shinku Gijutsu Co., Ltd. The ion source used was a MIS-250 type produced by Nippon Denshi Co., Ltd.

Before providing a perpendicular magnetic film on the soft magnetic film, the coercive force and cracks of the latter film were measured. In addition to this measurement, the X-ray diffractometry and the XPS measurement were carried out, that is their measurements were carried out for the soft magnetic film without the perpendicular magnetic film formed thereon.

The polyethylene terephthalate film having a soft magnetic film deposited thereon was located on the conveying system shown in Fig. 4. Cobalt was disposed in the recess of the electron-beam evaporator 16. The vacuum chamber 8, in which cobalt was disposed on the electron-beam evaporator 16, was exhausted through the exhaust openings 11 and 12 until a pressure of 5 x $10^{-4}$ Torr or less and a pressure in the vicinity of the substrate of 5 x $10^{-5}$ Torr or less were attained in the upper chamber 9 and the lower chamber 10, respectively A gas mixture of nitrogen gas and oxygen gas having the partial pressure ratio of 85:15 was admitted into the vicinity of a substrate through the variable leak valves 23A, 23B, so as to attain a predetermined pressure in the vicinity of the substrate of 5 x $10^{-3}$ Torr. After attaining this pressure, the polyethylene terephthalate film having a soft magnetic film preliminarily deposited thereon was driven to run.

Cobalt was melted and vaporized by the electron-beam. An approximately 0.25 μm perpendicular magnetic film was continuously formed, at a deposition rate of 10 μm/minute on the soft magnetic film by means of electron-beam, vacuum-deposition.

The temperature of the main drum 3, which was brought into a close contact with the rear surface of the polyethylene terephthalate film, was cooled to 5°C or less. The shielding plate 13 was disposed in such a manner that the cobalt vapor was incident upon the substrate at an incident angle of 45 degrees or less. The electron-beam evaporator used was the EGL-110 type produced by Nippon Shinku Gijutsu Co., Ltd.

In the production procedure of a soft magnetic film, described above, the acceleration energy of an ion beam and the ion radiation density were varied as follows.

In Example 1, the acceleration energy of an ion beam was 0.5 keV and the radiation density was 200 $\mu A/cm^2$ at the formation of a soft magnetic film.

In Example 2, the acceleration energy of an ion beam was 1.0 keV and the radiation density was 250 $\mu A/cm^2$ at the formation of a soft magnetic film.

In Example 3, the acceleration energy of an ion beam was 0.3 keV and the radiation density was 200 $\mu A/cm^2$ at the formation of a soft magnetic film.

The electron-beam radiation was not carried out in Comparative Example 1.

In Examples 1-3 and Comparative Example 1, the power input to the electron-beam evaporator was 4 kW (constant) for the formation of both the soft magnetic film and the perpendicular magnetic film.

In Table 1, the conditions for ion-beam radiation as well as the presence and absence of cracks in the soft magnetic films and their coercive force prior to formation of a perpendicular magnetic film, and also the presence and absence of cracks in the perpendicular magnetic films formed on the soft magnetic films, are listed.

Table 1

| | Acceleration Energy of Ion Beam (KeV) | Radiation Density of Ion Beam ($\mu$A/cm$^2$) | Pressure in Chamber during Formation of Soft Magnetic Layer (Torr) | Coercive Force of Soft Magnetic Film (Oe) | Presence of Cracks in Soft Magnetic Film | Presence of Cracks in Perpendicular Magnetic Film | Relative Peak Height of X-ray Diffraction from (111) Plane of Soft Magnetic Film | Half-value Width of X-ray Diffraction peak from (111) Plane of Soft Magnetic Film (dgree) | Quantity of Carbon Atoms in Soft Magnetic Film (atomic%) | Quantity of Atoms (ionized in Ion Beam) in Soft Magnetic Film (atomic%) |
|---|---|---|---|---|---|---|---|---|---|---|
| Example 1 | 0.5 | 200 | $1 \times 10^{-4}$ | 6 | none | none | 1.2 | 0.7 | 0.23 | 0.62 |
| Example 2 | 1.0 | 250 | $1 \times 10^{-4}$ | 2 | none | none | 2.1 | 0.7 | 0.22 | 0.67 |
| Example 3 | 0.3 | 200 | $1 \times 10^{-4}$ | 15 | none | none | 1.6 | 0.9 | 0.22 | 0.6 |
| Comparative Example 1 | 0 | 0 | $5 \times 10^{-5}$ | 40 | present | present | 1.0 | 1.1 | 0.55 | 0.1 or less |

0190854

In Examples 1 and 2, cracks were not generated in the soft magnetic films, a coercive force of the soft magnetic films was less than 10 Oe, and cracks were not generated in the perpendicular magnetic films formed on the soft magnetic films.

In Example 3, although the coercive force of the soft magnetic film was relatively high, since the acceleration energy of an ion beam was somewhat low, cracks were not found in the soft magnetic film.

In Comparative Example 1, in which the vacuum-deposition was an ordinary one without the ion-beam radiation, a number of fine cracks were generated in the soft magnetic film and the film had a whitish, dull appearance. In addition, the coercive force thereof was high. The cracks were not covered even after the formation of the perpendicular magnetic film, and cracks appeared on the top surface of the medium.

The ion-beam radiation improved the crystal orientation of the (111) plane of the soft magnetic films and lessened the quantity of impurity-carbon atoms contained in the soft magnetic films. The soft magnetic films irradiated with an ion beam during their formation contained approximately 0.6% of argon therein. The argon content of the soft magnetic film not irradiated with the ion beam during the formation thereof was less than the lower limit of detection by XPS.

Examples 4, 5

In Example 4, the procedure of Example 2 was repeated except that iron was used as the evaporation material for forming a perpendicular magnetic film.

In Example 5, the procedure of Example 2 was repeated except that the evaporation material, in which the weight proportion of cobalt to iron was 80:20, was used for forming a perpendicular magnetic film.

In Table 2, conditions for forming a soft magnetic film and a perpendicular magnetic film as well as the presence and absence of cracks in the soft magnetic films and their coercive force prior to formation of a perpendicular magnetic film, and the presence and absence of cracks in the perpendicular magnetic films formed on the soft magnetic films are listed.

In all of the examples, no cracks were generated in the soft magnetic films and the perpendicular magnetic films.

Example 6

The procedure of Example 2 was repeated except that neon gas was introduced in the ion source and converted to an ion beam. The coercive force of the soft magnetic film was low, and no cracks were generated in the soft magnetic film and the perpendicular magnetic film as shown in Table 2.

Comparative Example 2

The procedure of Example 1 was repeated except that the substrate was not irradiated with the ion beam during formation of a soft magnetic film, and the temperature of the main drum, which was brought into close contact with the rear surface of the base, was 150°C.

In Table 2, conditions for forming a soft magnetic film and a perpendicular magnetic film as well as the presence and absence of cracks in the soft magnetic film and its coercive force prior to formation of a perpendicular magnetic film, and the presence and absence of cracks in the perpendicular magnetic film formed on the soft magnetic film are listed.

The coercive force was less than the case where the main drum-temperature was 10°C but was not satisfactorily low. The generation of cracks could not be prevented. The cracks did not disappear even after forming the perpendicular magnetic film on the soft magnetic film.

Example 7

The procedure of Example 2 for forming a soft magnetic film was repeated except that the substrate was a biaxially oriented polyimide film. On this soft magnetic film a perpendicular magnetic film substantially consisting of cobalt and chromium were successively formed. The sputtering target was made of alloy containing cobalt and chromium at a weight ratio of 83:17. The vacuum chamber was exhausted to $1 \times 10^{-6}$ Torr or less and then argon gas was admitted to the vacuum chamber until a pressure of $2 \times 10^{-3}$ Torr was obtained.

Negative voltage was applied to the sputtering target to generate a glow discharge, thereby forming a perpendicular magnetic film on the substrate in the form of a cut sheet, which was located in front of the sputtering target, and which was preliminarily provided with the soft magnetic film. The deposition rate of the perpendicular magnetic film was 0.3 µm/minute and the film thickness was 0.25 µm. The temperature of the holder, which was brought into close contact with the rear surface of the substrate, was kept to 200°C. The sputtering device used was EVP-10758 type produced by Nichiden Anelva Co., Ltd. and cracks were not generated in the soft magnetic film and the perpendicular magnetic film.

Table 2

| | Acceleration Energy of Ion Beam (KeV) | Radiation Density of Ion Beam $(\mu A/cm^2)$ | Pressure in Chamber during Formation of Soft Magnetic Layer (Torr) | Temperature of Main Drum (°C) | Coercive Force of Soft Magnetic Film $(\bar{O}e)$ | Presence of Cracks in Soft Magnetic Film | Weight Proportion of Components of evaporation Materials for Perpendicular Magnetic Film (Cobalt: Iron) | Presence of Cracks in Perpendicular Magnetic Film |
|---|---|---|---|---|---|---|---|---|
| Example 4 | 1.0 | 250 | $1 \times 10^{-4}$ | 10 | 2 | none | 0:100 | none |
| Example 5 | 1.0 | 250 | $1 \times 10^{-4}$ | 10 | 2 | none | 80:20 | none |
| Example 6 | 1.0 | 250 | $2 \times 10^{-4}$ | 10 | 9 | none | 100:0 | none |
| Comparative Example 2 | 0 | 0 | $5 \times 10^{-5}$ | 150 | 26 | present | 100:0 | present |
| Example 7 | 1.0 | 250 | $1 \times 10^{-4}$ | 10 | 2 | none | Cobalt: * Chromium 83:17 | none |

* weight proportion of components of sputtering target for a cobalt-chromium perpendicular magnetic film

CLAIMS :

1. A method for producing a perpendicular magnetic recording medium which comprises successively forming on a polymeric substrate, a soft magnetic film, by vacuum depositing iron and nickel under irradiation of an accelerated ion-beam, and a perpendicular magnetic film having a magnetic anisotropy perpendicular to the surface of the polymeric substrate.

2. A method according to claim 1, wherein the ion-beam comprises ions selected from argon, helium, krypton, hydrogen and ammonia ions.

3. A method according to claim 1 or claim 2, wherein said ion-beam is accelerated at an energy of from 200 eV to 6000 eV.

4. A method according to any preceding claim, wherein the radiation density of said ion-beam is in the range of from 1 µA/cm² to 50 mA/cm² at the surface of said substrate.

5. A method according to any preceding claim, wherein the weight proportion of iron and nickel in said soft magnetic film is in the range of from 10:90 to 30:70.

6. A method according to any preceding claim, wherein said substrate has a temperature in the range of from -30°C to 130°C during formation of the soft magnetic film.

7. A method according to any preceding claim, wherein said soft magnetic film further contains at least one metal selected from manganese, molybdenum, chromium and copper in an amount of at most 10% by weight.

8. A method according to any preceding claim, wherein said perpendicular magnetic film comprises cobalt/cobalt oxides and/or iron/iron oxides.

9. A method according to any preceding claim, wherein the soft magnetic film has a coercive force of less than 15 Oe.

10. A method according to any preceding claim, wherein incident angle of the vapor of iron and nickel is less
than 45 degrees.

# Fig. I

## Fig. 2

## Fig. 3

Fig. 4